# EUROPEAN PATENT APPLICATION

(11) **EP 4 830 984 A1**
(43) Date of publication of application: **28.10.2026**
(21) Application number: 25851726.7
(22) Date of filing: 07.07.2025
(51) Int. Cl.: B60L 53/80, B60L 53/30, B60L 53/60

(54) **BATTERY SWAPPING DEVICE**

(30) Priority: 09.08.2024 KR 20240106639
(71) Applicant: LG Energy Solution, Ltd., Seoul 07335 (KR)
(72) Inventor: RYU, Jeong Hun, Daejeon 34122 (KR)
(74) Representative: BCKIP Part mbB
(86) International application number: PCT/KR2025/009780
(87) International publication number: WO 2026/034818

(57) **Abstract**

According to an embodiment disclosed in the present document, a battery swapping device may comprise: a plurality of charging slots into which batteries are inserted; a plurality of chargers for charging the batteries inserted into the plurality of charging slots; a connection circuit including a plurality of switches for electrically connecting the plurality of charging slots and the plurality of chargers; and a processor for controlling a connection between the plurality of charging slots and the plurality of chargers by controlling the states of the plurality of switches, wherein the number of the plurality of chargers is less than the number of the plurality of charging slots.

## Description

### Technical Field

This application claims the benefit of Korean Patent Application No. 10-2024-0106639, filed on August 9, 2024, in the Korean Intellectual Property Office, the disclosure of which is incorporated herein by reference in its entirety.

Example embodiments of the present disclosure relate to a battery swapping device.

### Background Art

Recently, the research and development of a secondary battery is actively conducted. Here, the secondary battery is a rechargeable and dischargeable battery, and the term thereof includes all of a conventional nickel-cadmium (Ni/Cd) battery, nickel-metal hydride battery, and the like, and an up-to-date lithium-ion battery. Among secondary batteries, the lithium-ion battery has a higher energy density compared to the conventional Ni/Cd battery, Ni/MH battery, and the like. In addition, the lithium-ion battery may be manufactured to be small in size and light in weight and thus used as the power source of a mobile device. As the range of the use thereof expands to the power source of an electric vehicle recently, the lithium-ion battery is in the spotlight as a next generation energy storage medium.

A swappable battery charging station (SBCS) or a battery swapping station in which a swappable battery is charged in order to swap a discharged battery pack for a charged battery pack is currently adopted. The users may use a battery pack, rented from the battery swapping station, for an electric two-wheeled vehicle or the like and then rent a new battery pack while returning the discharged battery pack. To this end, the battery swapping station may be installed at a highly accessible position such as a place near a convenience store or a gas station.

Such a battery swapping station is a technology to quickly swap a battery pack, which is particularly required for the electric two-wheeled vehicle, so that the user of the two-wheeled vehicle may resume the operation without waiting a long time of charging. Recently, as standardized battery sizes and interfaces are adopted, the compatibility between electric two-wheeled vehicles of various manufacturers is increased.

### Detailed Description of the Invention

### Technical Goals

Example embodiments of the present disclosure are to provide a battery swapping device of which a production cost and an operation cost are reduced and with which efficient charging control is allowed.

However, the goals to be achieved by example embodiments of the present disclosure are not limited to the objectives described above and other objects may be clearly understood from the following example embodiments by those skilled in the art.

### Technical solutions

According to an example embodiment of the present disclosure, there is provided a battery swapping device including a plurality of charging slots into which a battery is introduced, a plurality of chargers for charging the battery introduced into the plurality of charging slots, a connection circuit comprising a plurality of switches for electrically connecting the plurality of charging slots and the plurality of chargers, and a processor configured to control connection between the plurality of charging slots and the plurality of chargers by controlling statuses of the plurality of switches, and a number of the plurality of chargers is smaller than a number of the plurality of charging slots.

The plurality of switches may be disposed so that each of the plurality of charging slots has a connection path to at least one of the plurality of chargers.

The plurality of chargers may include a first charger group and a second charger group, the plurality of charging slots may include a first charging slot group and a second charging slot group, the connection circuit may include a first connection circuit configured to connect the first charger group and the first charging slot group, a second connection circuit configured to connect the second charger group and the second charging slot group, and a third connection circuit configured to connect the first connection circuit and the second connection circuit, and the first connection circuit and the second connection circuit may be symmetrically formed.

The first charger group may include first to i-th (in which i is a natural number greater than or equal to 2) chargers, the first charging slot group may include first to i+1-th charging slots, and the first connection circuit may include an i+1-th connection line configured to connect a first charger and a first charging slot and comprising at least one switch, a j-th (in which j is a natural number greater than or equal to 1 and less than or equal to i) connection line configured to connect a j-th charger and a j+1-th charging slot and comprising at least one switch, and at least one switch configured to connect a k-th (in which k is a natural number greater than or equal to 1 and less than or equal to i-1) connection line and a k+1-th connection line.

The first connection line may include one switch, each of the second connection line to the i+1-th connection line may include two switches, the first connection circuit may include two switches configured to connect the k-the connection line and the k+1-th connection line, and the third connection circuit may include a switch disposed between a point between two switches included in the i-th connection line of the first connection circuit and a corresponding point in the second connection circuit, and a switch disposed between a point between two switches included in the i+1-th connection line of the first connection circuit and a corresponding point in the second connection circuit.

The plurality of chargers may include first to i-th (in which i is a natural number greater than or equal to 2) chargers, the plurality of charging slots may include first to i+1-th charging slots, the connection circuit may include a j-th (in which j is a natural number greater than or equal to 1 and less than or equal to i) connection line configured to connect a j-th charger and a j-th charging slot and an i+1-th connection line configured to connect an i-th charger and an i+1-th charging slot, each of k-th (in which k is a natural number greater than or equal to 1 and less than or equal to i+1) connection lines may include one switch, and one switch configured to connect an m-th (in which m is a natural number greater than or equal to 1 and less than or equal to i-1) connection line and an m+1-th connection line may be included.

The plurality of chargers may include a first charger group and a second charger group, the plurality of charging slots may include a first charging slot group and a second charging slot group, the connection circuit may include a first connection circuit configured to connect the first charger group and the first charging slot group, and a second connection circuit configured to connect the second charger group and the second charging slot group, and the first connection circuit and the second connection circuit may have an identical connection structure.

The first charger group may include first to i-th (in which i is a natural number greater than or equal to 2) chargers, the first charging slot group may include first to i+1-th charging slots, the first connection circuit may include a j-th (in which j is a natural number greater than or equal to 1 and less than or equal to i) connection line configured to connect a j-th charger and a j-th charging slot and an i+1-th connection line configured to connect an i-th charger and an i+1-th charging slot, each of k-th (in which k is a natural number greater than or equal to 1 and less than or equal to i+1) connection lines may include one switch, and one switch configured to connect an m-th (in which m is a natural number greater than or equal to 1 and less than or equal to i-1) connection line and an m+1-th connection line may be included.

The processor may be configured to identify a charging slot into which the battery is introduced among the plurality of charging slot, and control a switch, which corresponds to a result of the identifying among the plurality of switches, to be in a closed status.

The processor may be configured to control the plurality of switches based on a table in which a charging slot into which the battery is introduced and the statuses of the plurality of switches are matched.

### Effects of the Invention

According to example embodiments of the present disclosure, in a battery swapping device, the number of chargers may be designed to be less than the number of charging slots, so that a production cost and an operation cost may be reduced.

Other various effects identified directly or indirectly through the present disclosure may be additionally provided.

### Brief Description of Drawings

FIG. 1 is a diagram illustrating an example of a battery swapping system according to an example embodiment of the present disclosure.
FIG. 2 is a block diagram illustrating a configuration of a battery swapping device 10 according to an example embodiment of the present disclosure.
FIG. 3 is a diagram illustrating an example of a structure of a battery diagnosis device 10 according to a first example embodiment of the present disclosure.
FIG. 4 is a diagram illustrating an example of a structure of a battery diagnosis device according to a second example embodiment of the present disclosure.
FIG. 5 is a diagram illustrating an example of a structure of a battery diagnosis device according to a third example embodiment of the present disclosure.

### Mode for Carrying Out the Invention

Hereinafter, various example embodiments of the present disclosure will be described with reference to the accompanying drawings. However, it should be understood that this is not to limit the present disclosure to a specific embodiment and various modifications, equivalents, and/or alternatives of the example embodiments of the present disclosure are included.

The singular form of a noun corresponding to an item in the present disclosure may include one item or a plural of items unless clearly described otherwise in context. In the present disclosure, expressions such as "A or B", "at least one of A and B", "at least one of A or B", "A, B, or C", "at least one of A, B, and C", and "at least one of A, B, or C" each may include one of the items listed together in the corresponding phrase among the expressions or all possible combinations thereof. Terms such as "first" or "second" may be used to simply distinguish the corresponding element from other elements and do not limit the corresponding elements in another aspect (e.g., importance or order). Where some element (e.g., a first element) is described as being "coupled" or "connected" to another element (e.g., a second element) with or without the term "functionally" or "communicatively", it is understood that the element may be connected to the other element directly (for example, in a wired manner), wirelessly, or through a third element.

Each of the elements described in the present disclosure (e.g., modules or programs) may include a single object or a plurality of objects. According to the various example embodiments, one or more elements or operations of the corresponding elements may be omitted, or one or more other elements or operations may be added. Alternatively or additionally, a plurality of elements (e.g., the modules or the programs) may be integrated into one element. In this case, the integrated element may perform one or more functions of each of the plurality of elements in a way identical or similar to the way in which a function is performed by the corresponding element among the plurality of elements before the integration. According to the various example embodiments, operations performed by a module, a program, or another element may be executed sequentially, in parallel, repeatedly, or heuristically. Alternatively, one or more of the operations may be executed in different order or omitted, or one or more other operations may be added thereto.

The term "module or "unit", which is used in the present disclosure, may include a unit realized in hardware, software, or firmware and may be used to be interchangeable with a term such as logic, logic block, component, or circuit. A module may be an integrally formed component or a minimum unit or a portion of the component, which performs one or more functions. For example, according to an example embodiment, the module may be implemented in the form of an application-specific integrated circuit (ASIC).

The various example embodiments may be implemented as the software (e.g., a program or an application) including one or more instructions stored in a storage medium readable by a machine. For example, the processor of the machine may call at least one instruction among the one or more stored instructions from the storage medium and execute the at least one instruction. This allows the machine to be operated so as to perform at least one function according to the at least one called instruction. The at least one or more instructions may include code generated by a complier or code executable by an interpreter. The storage medium readable by the machine may be provided in the form of a non-transitory storage medium. Here, the term "non-transitory" merely means that the storage medium is tangible and does not include a signal (e.g., an electromagnetic wave). The term does not distinguish the case in which data is stored semipermanently in the storage medium and the case in which the data is stored temporarily therein.

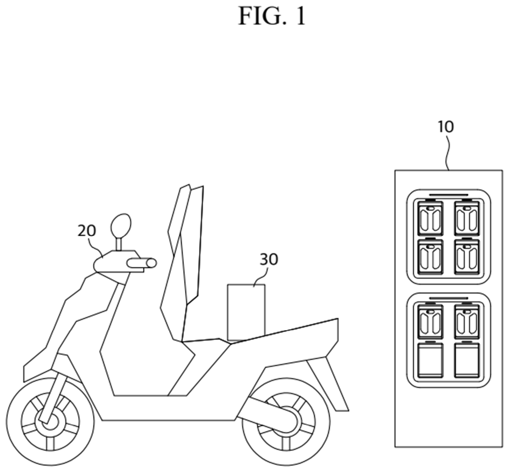

FIG. 1 is a diagram illustrating an example of a battery swapping system according to an example embodiment of the present disclosure.

Referring to FIG. 1, a battery swapping device 10 may receive and charge a battery mounted to an external apparatus (e.g., transportation such as a two-wheeled vehicle) and consumed, and a battery in charging or charged may be provided therein.

The battery swapping device 10 may correspond to a battery swapping station (BSS) or a swappable battery charging station (SBCS) used in a battery swapping service.

A vehicle 20 may include a two-wheeled vehicle, and a battery 30 may be a swappable battery. For example, the battery 30 may be detached from the vehicle 20. However, although the vehicle 20 is illustrated as a two-wheeled vehicle in FIG. 1, example embodiments according to the present disclosure are applicable to various electric moving apparatus driven through a chargeable battery pack, and an example embodiment of the vehicle 20 which includes the battery 30 is not limited to a predetermined case.

A user of the vehicle 20 mounted with the battery 30 may swap the battery 30 by using the battery swapping device 10. For example, the user may introduce a used battery that has been mounted to the vehicle 20 into the battery swapping device 10 and may receive a battery that has been introduced in the battery swapping device 10.

As an example, the user may access an application that provides a battery swapping service associated with use of the battery swapping device 10 and may perform a battery swap that uses the battery swapping device 10.

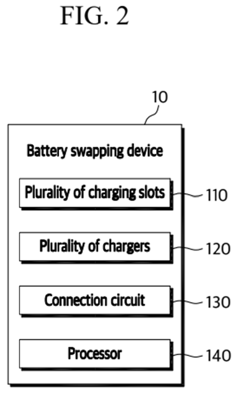

FIG. 2 is a block diagram illustrating a configuration of the battery swapping device 10 according to an example embodiment of the present disclosure.

Referring to FIG. 2, the battery swapping device 10 may include a plurality of charging slots 110, a plurality of chargers 120, a connection circuit 130, and a processor 140.

A battery may be introduced into the plurality of charging slots 110. A battery for charging may be introduced into each of the plurality of charging slots 110, and a battery may be selected by a user therefrom and discharged.

The plurality of chargers 120 may be an element for charging the battery introduced into the plurality of charging slots 110. The plurality of chargers 120 may be electrically connected to the plurality of charging slots 110 to provide power for charging the battery introduced into the plurality of charging slots 110.

Since the battery swapping device has a structure in which the user returns a battery and takes out a battery that has been introduced into the battery swapping device, at least a portion of the charging slots of the battery swapping device is always empty. For example, when a pair of batteries mounted to a two-wheeled vehicle is introduced, and when a pair of batteries that has introduced into the battery swapping device is taken out, two of the charging slots of the battery swapping device are always empty. Thus, when the number of the chargers and the number of the charging slots of the battery swapping device are designed to be equal, some chargers always do not operate, and as a result, the chargers are designed to have a capacity larger than an amount of power actually required for operating a battery diagnosis device.

Thus, according to an example embodiment, the number of the plurality of chargers 120 may be smaller than the number of the plurality of charging slots 110. That is, a battery diagnosis device 10 may include chargers of which the number is smaller than the number of charging slots so that a production cost and an operation cost of the battery swapping device 10 are reduced and so that efficient charging control is allowed.

The connection circuit 130 may include a plurality of switches for electrically connecting the plurality of charging slots 110 and the plurality of chargers 120. The connection circuit 130 may be designed to have a structure for an optimized connection between the plurality of charging slots 110 and the plurality of chargers 120 in the battery swapping device 10, which has the chargers of which the number is smaller than the number of the charging slots as described above, and guaranteeing charging of a battery introduced into a charging slot.

In other words, in order that the connection circuit 130 guarantees the charging of the battery introduced into the charging slot, according to an example embodiment, the plurality of switches may be disposed to the connection circuit 130 so that a connection path between each of the plurality of charging slots 110 and at least one of the plurality of chargers 120 is present.

Each of the plurality of switches may be various types of switches such as a metal-oxide-semiconductor field-effect transistor (MOSFET) switch, a transistor switch, and a relay.

Hereinafter, various example embodiments of the connection circuit 130 will be described in detail.

### First Example Embodiment

According to an example embodiment, the plurality of charging slots 110 may include a first charging slot group and a second charging slot group, and the plurality of chargers 120 may include a first charger group and a second charger group. In addition, the connection circuit 130 may include a first connection circuit that connects the first charger group and the first charging slot group, a second connection circuit that connects the second charger group and the second charging slot group, and a third connection circuit that connects the first connection circuit and the second connection circuit.

Here, the first connection circuit and the second connection circuit may be symmetrically formed. That is, a disposition of a switch included in the first connection circuit and a disposition of a switch included in the second connection circuit may be symmetrical.

Since the first connection circuit and the second connection circuit are symmetrically formed, the numbers of charging slots included in the first charging slot group and the second charging slot group may be equal, and the numbers of chargers included in the first charger group and the second charger group also may be equal.

According to an example embodiment, the first charger group may include first to i-th chargers. At this point, i is a natural number greater than or equal to 2 and may refer to the number of chargers included in each charger group.

Here, the first charging slot group may include first to i+1-th charging slots. That is, the number of charging slots included in the first charging slot group may be larger than the number of chargers included in the first charger group by one. Similarly, the number of charging slots included in the second charging slot group may be larger than the number of chargers included in the second charger group by one, and the number of charging slots of the plurality of charging slots 110 may be larger than the number of chargers of the plurality of chargers 120 by two.

According to an example embodiment, the first connection circuit may include an i+1-th connection line connecting a first charger and a first charging slot and including at least one switch. In addition, the first connection circuit may include a j-th connection line connecting a j-th charger and a j+1-th charging slot and including at least one switch. Here, j is a natural number greater than or equal to 1 and less than or equal to i and is a variable. A connection line may be formed for each j value. In other words, the first connection circuit may include i+1 connection lines.

According to an example embodiment, the first connection circuit may include at least one switch connecting a k-th connection line and a k+1-th connection line. Here, k is a natural number greater than or equal to 1 and less than or equal to i-1 and is a variable. In other words, the first connection circuit may include a switch connecting adjacent connection lines from a first connection line to an i-th connection line. At this point, a switch connecting the i-th connection line and the i+1-th connection line may not be provided.

According to an example embodiment, the first connection line may include one switch, and each of second to i+1-th connection lines may include two switches. Also, the first connection circuit may include two switches connecting the k-th connection line and the k+1-th connection line.

When formed as such, the first connection circuit may include 4i-1 switches.

According to an example embodiment, the third connection circuit may include a switch disposed between a point between two switches included in the i-th connection line of the first connection circuit and a corresponding point in the second connection circuit and a switch disposed between a point between two switches included in the i+1-th connection line of the first connection circuit and a corresponding point in the second connection circuit.

In other words, the third connection circuit may include two switches connected in parallel in order to electrically connect the first connection circuit and the second connection circuit and may electrically connect the first connection circuit and the second connection circuit.

When formed as such, the connection circuit 130 may include (4i-1)*2+2 = 8i switches.

As described above, two of the charging slots of the battery diagnosis device 10 may be always empty, and a maximum of 2i batteries may be introduced into the plurality of charging slots 110 of the battery diagnosis device 10. At this point, although a battery is introduced into any charging slot among the plurality of charging slots 110, the connection circuit 130 of the battery diagnosis device 10 according to the first example embodiment may achieve electrical connection between a charging slot and a charger. Also, although a position of the battery introduced into the battery diagnosis device 10, namely, the charging slot is changed, a changeover in switches is not required.

### Second Example Embodiment

According to an example embodiment, the plurality of chargers 120 may include first to i-th chargers. Here, i is a natural number greater than or equal to 2 and may refer to the number of chargers included in each charger group.

At this point, the plurality of charging slots 110 may include first to i+1-th charging slots. That is, the number of charging slots of the plurality of charging slots 110 of the battery diagnosis device 10 according to the second example embodiment may be larger than the number of chargers of the plurality of chargers 120 by one.

According to an example embodiment, the connection circuit 130 may include a j-th connection line connecting a j-th charger and a j-th charging slot and an i+1-th connection line connecting an i-th charger and an i+1-th charging slot. Here, j is a natural number greater than or equal to 1 and less than or equal to i and is a variable. A connection line may be formed for each j value. In other words, the connection circuit 130 may include i+1 connection lines.

According to an example embodiment, each k-th connection line of the connection circuit 130 may include one switch. Here, k is a natural number greater than or equal to 1 and less than or equal to i+1 and is a variable. Each connection line may include one switch.

Also, the connection circuit 130 may include one switch connecting an m-th connection line and an m+1-th connection line. Here, m is a natural number greater than or equal to 1 and less than or equal to i-1 and is a variable. In other words, the connection circuit 130 may include a switch connecting adjacent connection lines from a first connection line to an i-th connection line. At this point, a switch connecting the i-th connection line and the i+1-th connection line may not be provided.

When formed as such, the connection circuit 130 may include 2i switches.

As described above, two of the charging slots of the battery diagnosis device 10 may be always empty, and a maximum of 2i batteries may be introduced into the plurality of charging slots 110 of the battery diagnosis device 10. At this point, although a battery is introduced into any charging slot among the plurality of charging slots 110, the connection circuit 130 of the battery diagnosis device 10 according to the first example embodiment may achieve electrical connection between a charging slot and a charger. Also, although a position of the battery introduced into the battery diagnosis device 10, namely, the charging slot is changed, a changeover in switches is not required.

However, a shortcoming of the battery swapping device 10 according to the second example embodiment is that the charging slot and the charger are disconnected in a process of changing a status of a switch when a position of the charging slot into which the battery is introduced is changed.

### Third Example Embodiment

According to an example embodiment, the plurality of charging slots 110 may include a first charging slot group and a second charging slot group, and the plurality of chargers 120 may include a first charger group and a second charger group. In addition, the connection circuit 130 may include a first connection circuit that connects the first charger group and the first charging slot group and a second connection circuit that connects the second charger group and the second charging slot group.

Here, the first connection circuit and the second connection circuit may have an identical connection structure. That is, a disposition of a switch included in the first connection circuit and a disposition of a switch included in the second connection circuit may be identical.

According to an example embodiment, the first charger group may include first to i-th chargers. Here, i is a natural number greater than or equal to 2 and may refer to the number of chargers included in each charger group.

Here, the first charging slot group may include first to i+1-th charging slots. That is, the number of charging slots included in the first charging slot group may be larger than the number of chargers included in the first charger group by one. Similarly, the number of charging slots included in the second charging slot group may be larger than the number of chargers included in the second charger group by one, and the number of charging slots of the plurality of charging slots 110 may be larger than the number of chargers of the plurality of chargers 120 by two.

According to an example embodiment, the first connection circuit may include a j-th connection line connecting a j-th charger and a j-th charging slot and an i+1-th connection line connecting an i-th charger and an i+1-th charging slot. Here, j is a natural number greater than or equal to 1 and less than or equal to i and is a variable. A connection line may be formed for each j value. In other words, the first connection circuit may include i+1 connection lines.

According to an example embodiment, each k-th connection line of the first connection circuit may include one switch. Here, k is a natural number greater than or equal to 1 and less than or equal to i+1 and is a variable. Each connection line may include one switch.

Also, one switch connecting an m-th connection line and an m+1-th connection line of the first connection line may be included. Here, m is a natural number greater than or equal to 1 and less than or equal to i-1 and is a variable. In other words, the first connection circuit may include a switch connecting adjacent connection lines from a first connection line to an i-th connection line. At this point, a switch connecting the i-th connection line and the i+1-th connection line may not be provided.

When formed as such, the first connection circuit may include 2i switches. Similarly, the second connection circuit may include 2i switches, and accordingly, the connection circuit 130 may include 4i switches.

In other words, a structure of the connection circuit 130 of the battery diagnosis device 10 according to the third example embodiment may be a structure in which structures of the connection circuit 130 according to the second example embodiment are connected in parallel.

According to an example embodiment, the processor 140 may control connection between the plurality of charging slots 110 and the plurality of chargers 120 by controlling statuses of the plurality of switches. The processor 140 may allow, by controlling the statuses of the plurality of switches, the charging slot into which the battery is introduced and one charger among the plurality of chargers 120 to be electrically connected. Through this, the battery which is introduced into the charging slot may be charged.

According to an example embodiment, the processor 140 may identify the charging slot into which the battery is introduced among the plurality of charging slots 110. Generally, since a pair of paired batteries is provided to the two-wheeled vehicle, the pair of batteries may be introduced into a battery charging device 10, and the processor 140 may identify two charging slots in charging, into which the pair of batteries are introduced, among the plurality of charging slots 110. However, this is merely one example embodiment, and one single battery may be introduced into a charging slot.

According to an example embodiment, the processor 140 may control a switch, which corresponds to a result of identification among the plurality of switches, to be in a closed status. Here, the switch corresponding to the result of the identification may refer to switches included in a connection path for establishing an electrical connection between the charging slot into which the battery is introduced and the corresponding charger. The processor 140 may establish, by controlling the switch corresponding to the result of the identification to be in the closed status, the electrical connection between the charging slot into which the battery is introduced and the one charger among the plurality of chargers 120.

According to an example embodiment, the processor 140 may control the plurality of switches based on a table in which the charging slot into which the battery is introduced and the statuses of the plurality of switches are matched. For example, depending on the structure of the connection circuit 130, the processor 140 may match and store a position of the charger for establishing the electrical connection to the charging slot into which the battery is introduced and a status of the switch therefor.

As such, the battery swapping device 10 may reduce the number of chargers to be provided, and accordingly, a production cost of the battery swapping device 10 may be reduced. In addition, the number of charger required for the battery swapping device 10 may be reduced, so that a size of the battery swapping device 10 may be reduced, and installation of the battery swapping device 10 may be facilitated.

Furthermore, the number of chargers provided in the battery swapping device 10 may be adjusted in consideration of a demand for power, a demand for a swappable battery, or the like in a region in which the battery swapping device 10 is installed, and the connection circuit 130 between the plurality of charging slots 110 and the plurality of chargers 120 may be designed according thereto. Through this, a cost for the battery swapping device 10 may be reduced, and efficiency of operation may be increased together.

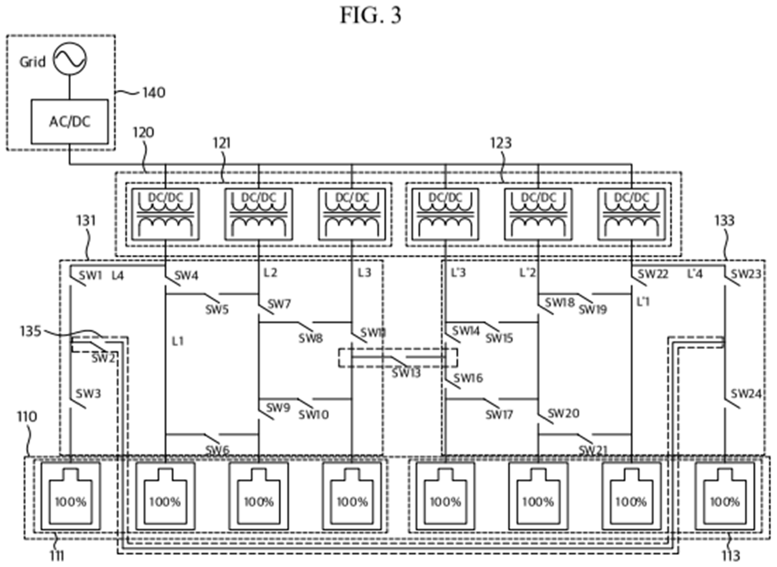

FIG. 3 is a diagram illustrating an example of a structure of a battery diagnosis device 10 according to a first example embodiment of the present disclosure.

Referring to FIG. 3, the plurality of charging slots 110 of the battery diagnosis device 10 according to the first example embodiment may include a first charging slot group 111 and a second charging slot group 113, and the plurality of chargers 120 may include a first charger group 121 and a second charger group 123. In addition, the connection circuit 130 may include a first connection circuit 131, a second connection circuit 133, and a third connection circuit 135.

Also, the battery diagnosis device 10 may include a grid power source and alternating current/direct current converter 140 that is connected to the plurality of chargers 120 to provide power.

The first charging slot group 111 and the second charging slot group 113 may include an equal number of charging slots. The first charger group 121 and the second charger group 123 may include an equal number of chargers. The first charging slot group 111 may be distinguished in order of disposition of charging slots, and the first charger group 121 may be distinguished in order of disposition of chargers.

FIG. 3 illustrates an example of the battery swapping device 10 which has 8 charging slots and 6 chargers. In a structure of the connection circuit 130 of the battery diagnosis device 10 according to the first example embodiment, circuit structures of the first connection circuit 131 and the second connection circuit 133 may be symmetrically formed.

The first connection circuit 131 may include first to fourth connection lines L1 to L4. That is, since i is 3 in FIG. 3, the first connection circuit 131 and the second connection circuit 133 each may include 4 connection lines. Similarly, the second connection circuit 133 may include connection lines L'1 to L'4.

A first connection line L1 may include one switch SW4. A second connection line L2 may include two switches SW7 and SW9. A third connection line L3 may include two switches SW11 and SW12. A fourth connection line L4 may include two switches SW1 and SW3.

In addition, two switches SW5 and SW6 may be included between the first connection line L1 and the second connection line L2, and two switches SW8 and SW10 may be included between the second connection line L2 and the third connection line L3.

The third connection line 135 may include a switch SW13 provided between a point between the two switches SW11 and SW12 included in the third connection line L3 and a corresponding point in the second connection circuit (namely, a point between SW13 and SW16). Also, the third connection line 135 may include a switch SW2 provided between a point between the two switches SW1 and SW3 included in the fourth connection line L4 and a corresponding point in the second connection circuit (namely, a point between SW23 and SW24).

When the 6 chargers and the 8 charging slots are provided as such, the connection circuit may include 24 switches. The processor 140 may identify a battery introduced into the plurality of charging slots 110 and control statuses of a plurality of switches.

For example, when a leftmost charging slot in FIG. 3 is referred to as a first charging slot, and when batteries are introduced into the first charging slot, a second charging slot, a fourth charging slot, a fifth charging slot, a sixth charging slot, and an eighth charging slot among the charging slots, the processor 140 may control statuses of SW1, SW3, SW4, SW11, SW12, SW14, SW16, SW18, SW20, SW23, and SW24 to be closed statuses. In contrast, the processor 140 may control SW2, SW5, SW6, SW7, SW8, SW9, SW10, SW13, SW15, SW17, SW19, SW21, and SW22 to be in an open status.

At this point, a status of a switch according to a position of a charging slot into which a battery is introduced may be matched and stored in a form of a table, and the processor 130 may control the status of the switch by using the table.

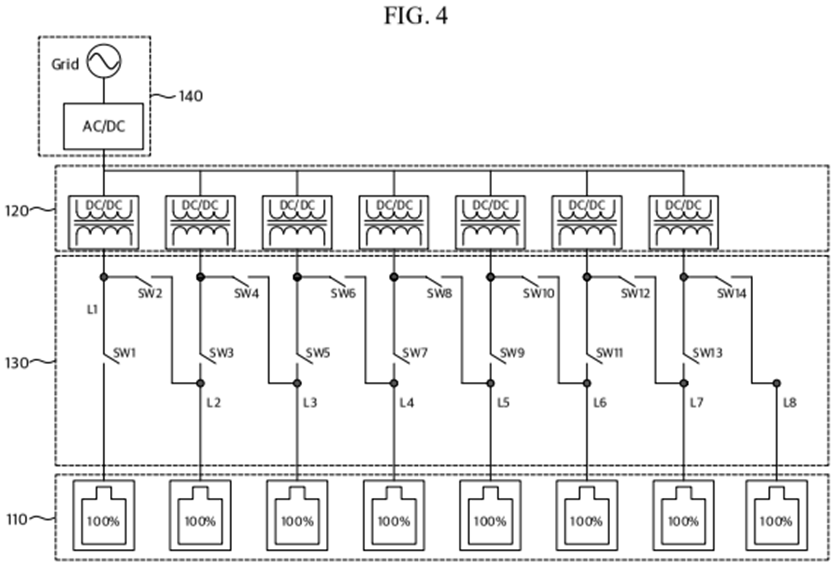

FIG. 4 is a diagram illustrating an example of a structure of a battery diagnosis device according to a second example embodiment of the present disclosure. FIG. 4 illustrates an example of a case in which 7 chargers and 8 charging slots are present.

Referring to FIG. 4, the connection circuit 130 of the battery diagnosis device 10 according to the second example embodiment may include first to eighth connection lines L1 to L8.

A first connection line L1 may include one switch SW1, and each connection line may include one switch. Also, one switch connecting the first connection line L1 and a second connection line L2 may be provided. Similarly, one switch connecting a sixth connection line L6 and a seventh connection line L7 may be provided.

As such, when the battery diagnosis device 10 is implemented, the connection circuit 130 may include 14 switches.

For example, when batteries are introduced into a second charging slot and a third charging slot, the processor 140 may control SW2 and SW4 to be in a closed status and control other switches to be in an open status.

The battery diagnosis device 10 according to the second example embodiment may be implemented so that charging in one of two adjacent charging slots is allowed as one charger is electrically connected to the two adjacent charging slots. For example, a first charger may charge a battery introduced into a first charging slot or the second charging slot depending on control of a status of a switch.

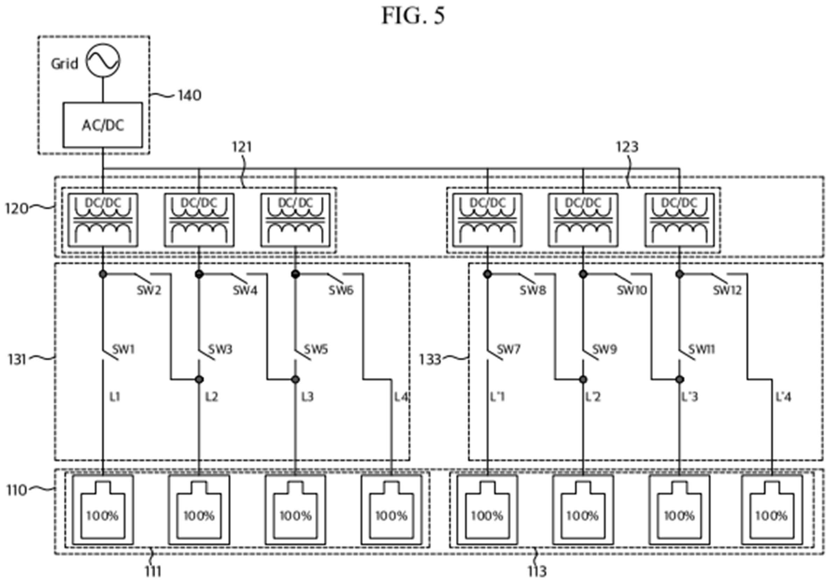

FIG. 5 is a diagram illustrating an example of a structure of a battery diagnosis device according to a third example embodiment of the present disclosure. FIG. 5 illustrates an example of a case in which the plurality of charging slots 110 includes 8 charging slots and the plurality of chargers 120 includes 6 chargers.

Referring to FIG. 5, in the battery diagnosis device 10 according to the third example embodiment, the plurality of charging slots 110 may include the first charging slot group 111 and the second charging slot group 113, and the plurality of chargers 120 may include the first charger group 121 and the second charger group 123.

In addition, in the battery diagnosis device 10 according to the third example embodiment, the connection circuit 130 may include the first connection circuit 131 and the second connection circuit 133. The first connection circuit 131 and the second connection circuit 133 may have an identical circuit structure.

For example, as illustrated in FIG. 5, the first connection circuit 131 may include the first to fourth connection lines L1 to L4, and each connection line may include one switch. For example, the fourth connection line L4 may include one switch SW6.

Also, one switch SW2 may be provided between the first connection line L1 and the second connection line L2, one switch SW4 may be provided between the second connection line L2 and the third connection line L3, and the one switch SW6 may be provided between the third connection line L3 and the fourth connection line L4.

As such, when the battery diagnosis device 10 is implemented, the connection circuit 130 may include 12 switches.

For example, when batteries are introduced into a first charging slot, a second charging slot, and a third charging slot, the processor 140 may control SW1, SW3, and SW5 to be in a closed status and control other switches to be in an open status.

The present specification and drawings have been described with respect to the example embodiments of the present disclosure. Although specific terms are used, it is only used in a general sense to easily explain the technical content of the present disclosure and to help the understanding of the invention, and is not intended to limit the scope of the specification. It will be apparent to those skilled in the art that other modifications based on the technical spirit of the present disclosure may be implemented in addition to the embodiments disclosed herein.

An apparatus or terminal according to the above-described example embodiments may include a processor, a memory that stores and executes program data, a permanent storage such as a disk drive, a communication port for communicating with an external device, and a user object device such as a touch panel, a key, and a button. Methods implemented by software modules or algorithms may be stored in a computer-readable recording medium as computer-readable code or program instructions executable in the processor. Here, the computer-readable recording medium may include a magnetic storage medium (e.g., a read-only memory (ROM), a random-access memory (RAM), a floppy disk, a hard disk, or the like), an optical reading medium (e.g., a CD-ROM or a digital versatile disc (DVD)), or the like. The computer-readable recording medium may be dispersed to computer systems connected by a network so that computer-readable codes may be stored and executed in a dispersed manner. The medium may be read by a computer, stored in the memory, and executed by the processor.

The present example embodiments may be represented by functional blocks and various processing steps. These functional blocks may be implemented by various numbers of hardware and/or software configurations that execute specific functions. For example, the present example embodiments may adopt integrated circuit configurations such as a memory, a processor, a logic circuit, and a look-up table that may execute various functions by control of one or more microprocessors or other control devices. Similarly to that elements may be executed by software programming or software elements, the present example embodiments may be implemented by programming or scripting languages such as C, C++, Java, and assembler language, including various algorithms implemented by combinations of data structures, processes, routines, or other programming configurations. Functional aspects may be implemented by algorithms executed by one or more processors. In addition, the present example embodiments may adopt the related art for electronic environment setting, signal processing, and/or data processing, for example. The terms "mechanism", "element", "means", and "configuration" may be widely used and are not limited to mechanical and physical components. These terms may include the meaning of a series of routines of software in association with a processor.

## Claims

1. A battery swapping device comprising:
a plurality of charging slots into which a battery is introduced;
a plurality of chargers for charging the battery introduced into the plurality of charging slots;
a connection circuit comprising a plurality of switches for electrically connecting the plurality of charging slots and the plurality of chargers; and
a processor configured to control connection between the plurality of charging slots and the plurality of chargers by controlling statuses of the plurality of switches,
wherein a number of the plurality of chargers is smaller than a number of the plurality of charging slots.

2. The battery swapping device of claim 1, wherein, in the connection
circuit, the plurality of switches is disposed so that each of the plurality of charging slots has a connection path to at least one of the plurality of chargers.

3. The battery swapping device of claim 2, wherein the plurality of
chargers comprises a first charger group and a second charger group, the plurality of charging slots comprises a first charging slot group and a second charging slot group,
the connection circuit includes:
a first connection circuit configured to connect the first charger group and the first charging slot group;
a second connection circuit configured to connect the second charger group and the second charging slot group; and
a third connection circuit configured to connect the first connection circuit and the second connection circuit, and
the first connection circuit and the second connection circuit are symmetrically formed.

4. The battery swapping device of claim 3, wherein the first charger group comprises first to i-th (wherein i is a natural number greater than or equal to 2) chargers,
the first charging slot group comprises first to i+1-th charging slots, and the first connection circuit comprises:
an i+1-th connection line configured to connect a first charger and a first charging slot and comprising at least one switch;
a j-th (wherein j is a natural number greater than or equal to 1 and less than or equal to i) connection line configured to connect a j-th charger and a j+1-th charging slot and comprising at least one switch; and
at least one switch configured to connect a k-th (wherein k is a natural number greater than or equal to 1 and less than or equal to i-1) connection line and a k+1-th connection line.

5. The battery swapping device of claim 4, wherein the first connection line comprises one switch,
each of the second connection line to the i+1-th connection line comprises two switches,
the first connection circuit comprises two switches configured to connect the k-the connection line and the k+1-th connection line, and the third connection circuit comprises:
a switch disposed between a point between two switches included in the i-th connection line of the first connection circuit and a corresponding point in the second connection circuit; and
a switch disposed between a point between two switches included in the i+1-th connection line of the first connection circuit and a corresponding point in the second connection circuit.

6. The battery swapping device of claim 2, wherein the plurality of chargers includes first to i-th (wherein i is a natural number greater than or equal to 2) chargers,
the plurality of charging slots comprises first to i+1-th charging slots,
the connection circuit comprises a j-th (wherein j is a natural number greater than or equal to 1 and less than or equal to i) connection line configured to connect a j-th charger and a j-th charging slot and an i+1-th connection line configured to connect an i-th charger and an i+1-th charging slot,
each of k-th (wherein k is a natural number greater than or equal to 1 and less than or equal to i+1) connection lines comprises one switch, and one switch configured to connect an m-th (wherein m is a natural number greater than or equal to 1 and less than or equal to i-1) connection line and an m+1-th connection line is included.

7. The battery swapping device of claim 2, wherein the plurality of chargers comprises a first charger group and a second charger group,
the plurality of charging slots comprises a first charging slot group and a second charging slot group,
the connection circuit comprises:
a first connection circuit configured to connect the first charger group and the first charging slot group; and
a second connection circuit configured to connect the second charger group and the second charging slot group, and
the first connection circuit and the second connection circuit have an identical connection structure.

8. The battery swapping device of claim 7, wherein the first charger group comprises first to i-th (wherein i is a natural number greater than or equal to 2) chargers,
the first charging slot group comprises first to i+1-th charging slots,
the first connection circuit comprises a j-th (wherein j is a natural number greater than or equal to 1 and less than or equal to i) connection line configured to connect a j-th charger and a j-th charging slot and an i+1-th connection line configured to connect an i-th charger and an i+1-th charging slot,
each of k-th (wherein k is a natural number greater than or equal to 1 and less than or equal to i+1) connection lines comprises one switch, and one switch configured to connect an m-th (wherein m is a natural number greater than or equal to 1 and less than or equal to i-1) connection line and an m+1-th connection line is included.

9. The battery swapping device of claim 1, wherein the processor is configured to:
identify a charging slot into which the battery is introduced among the plurality of charging slot; and
control a switch, which corresponds to a result of the identifying among the plurality of switches, to be in a closed status.

10. The battery swapping device of claim 1, wherein the processor is
configured to control the plurality of switches based on a table in which a charging slot into which the battery is introduced and the statuses of the plurality of switches are matched.
